# DEMANDE DE BREVET EUROPEEN

(11) **EP 4 717 419 A1**
(43) Date de publication de la demande: **01.04.2026**
(21) Numéro de dépôt: 25205097.6
(22) Date de dépôt: 26.09.2025
(51) Int. Cl.: B25J 15/00, B25J 15/02, B25J 15/06, B25J 15/10

(54) **DISPOSITIF PREHENSEUR**

(30) Priorité: 26.09.2024 FR 2410278
(71) Demandeur: B & S Robsim, 67500 Haguenau (FR)
(72) Inventeur: SELLET, Christian, 67500 HAGUENAU (FR)
(74) Mandataire: Bugnion Genève

(57) **Abrégé**

Dispositif préhenseur d'un objet comportant une plateforme (10) d'axe longitudinal (X) et six doigts (13,14) articulés en rotation sur la plateforme (10) et des moyens de préhension portés par chacune des extrémités libres des doigts (13, 14), les au moins trois doigts (13, 14) étant répartis angulairement de manière régulière autour de l'axe longitudinal (X), chaque doigt (13, 14) comportant une tringlerie à double parallélogramme comprenant un premier parallélogramme (P1) articulé sur la plateforme (10) autour d'un axe orthogonal à l'axe longitudinal (X), un deuxième parallélogramme (P2) étant articulé sur le premier parallélogramme (P1) et un jeu de pignons entre le premier parallélogramme (P1) et le deuxième parallélogramme (P2), de sorte que le déplacement dans un sens de rotation du premier parallélogramme (P1) impose un déplacement dans un sens de rotation opposé au deuxième parallélogramme (P2), et un actionneur (A1) porté par la plateforme et configuré pour déplacer simultanément tous les doigts (13 ,14).

## Description

### DOMAINE TECHNIQUE ET ART ANTERIEUR

La présente invention se rapporte à un dispositif préhenseur destiné à déplacer des objets.

Dans le secteur industriel, les tâches répétitives sont de plus en plus confiées à des automates. Lors de la réalisation de certaines de ces tâches, des objets sont saisis puis déplacés d'un emplacement à un autre, par exemple entre un lieu de stockage et une machine-outil sur laquelle la pièce subit des opérations.

Lorsque l'on souhaite saisir une pièce, le dispositif préhenseur prend une position spécifique par rapport à celle-ci pour s'assurer que la solidarisation a bien lieu entre le dispositif préhenseur et la pièce et pour s'assurer qu'il n'y a pas de risque de chute de l'objet pendant la manipulation de celle-ci.

Certains objets présentent des formes qui peuvent être complexes à manipuler.

Il existe des automates munis d'une pince ou d'une ventouse, cependant ils ne permettent pas de manipuler des objets de forme et de dimensions très différentes. En outre, suivant la forme de l'objet la solidarisation entre l'objet et le dispositif préhenseur n'est pas sûre.

De plus, il est important de maîtriser l'orientation des pièces lorsqu'elles sont déposées sur la machine-outil afin d'assurer une positionnement correct par rapport aux outils, ou lorsqu'elles sont stockées afin d'éviter de les endommager et afin d'optimiser le nombre de pièces stockées.

### EXPOSÉ DE l'INVENTION

C'est par conséquent un but de la présente demande d'offrir un dispositif préhenseur pour automate ne présentant pas les inconvénients ci-dessus.

Le but énoncé ci-dessus est atteint par un dispositif préhenseur comportant une plateforme et au moins trois doigts articulés sur la plateforme d'axe longitudinal, et un actionneur unique pour tous les doigts. Chaque doigt comporte deux membres formés chacun par un parallélogramme et à son extrémité libre des moyens de préhension. Les moyens de préhension comportent par exemple un mors apte à se déplacer longitudinalement et un actionneur associé au mors et/ou une ventouse.

La structure à double parallélogramme et la mise en œuvre d'un seul actionneur permet une commande unique et un déplacement simultané des moyens de préhension. En outre, les moyens de préhension se déplacent dans le même plan. Ainsi la saisie des pièces est sécurisée et leur orientation est améliorée.

En outre, la mise en œuvre d'un seul actionneur pour tous les doigts permet de simplifier la commande des doigts. Il n'est alors plus requis de synchroniser les actionneurs de tous les doigts, cette synchronisation étant imposée à tous les doigts par l'actionneur et la forme à double parallélogramme. En outre, le fait de n'avoir qu'un seul actionneur permet d'alléger le dispositif, ce qui est d'autant plus intéressant que le dispositif préhenseur est en général suspendu à un bras d'un automate.

De plus, la structure à double parallélogramme permet d'adapter la disposition des moyens de préhension au diamètre de l'objet. Le dispositif selon l'invention peut ainsi saisir des objets de dimensions différentes, en particulier de diamètres différents.

Par ailleurs, lorsque les mors présentent une possibilité de déplacement longitudinal, le dispositif s'adapte à des objet de différentes hauteurs.

La combinaison de mors et de ventouses permet avantageusement d'élargir la gamme des formes de pièce manipulable.

Par exemple l'actionneur des doigts est un piston électrique.

La présente invention a alors pour objet un dispositif préhenseur d'un objet comportant une plateforme d'axe longitudinal et au moins trois doigts articulés en rotation sur la plateforme et des moyens de préhension portés par chacune des extrémités libres des doigts, les au moins trois doigts étant répartis angulairement de manière régulière autour de l'axe longitudinal, chaque doigt comportant une tringlerie à double parallélogramme comprenant un premier parallélogramme articulé sur la plateforme autour d'un axe orthogonal à l'axe longitudinal, un deuxième parallélogramme étant articulé sur le premier parallélogramme et un jeu de pignons entre le premier parallélogramme et le deuxième parallélogramme, de sorte que le déplacement dans un sens de rotation du premier parallélogramme impose un déplacement dans un sens de rotation opposé au deuxième parallélogramme, et un actionneur porté par la plateforme et configuré pour déplacer simultanément tous les doigts.

Dans un exemple de réalisation, les moyens de préhension comportent des ventouses, chaque doigt portant un son extrémité libre une ventouse destinée à être connectée à un système d'aspiration.

Dans un exemple avantageux, les moyens de préhension comportent des mors, lesdits mors étant montés sur tout ou partie des doigts.

De préférence, le dispositif préhenseur comporte des moyens de déplacement d'au moins une partie des moyens de préhension par rapport à l'extrémité libre des doigts le long de l'axe longitudinal.

Par exemple, les moyens de déplacement comportent pour chacun desdits moyens de préhension un moteur électrique et un système à crémaillère.

De manière préférée, l'actionneur est un piston électrique aligné avec l'axe longitudinal et porté par la plateforme.

Par exemple, le dispositif comporte un système de conversion du déplacement linéaire du piston électrique en un mouvement de rotation de chacune des doigts, lesdits moyens étant du type à came.

Selon une caractéristique additionnelle, le premier parallélogramme comporte deux consoles, dont une console est fixée sur la plateforme, et deux bras parallèles articulés chacun sur les deux consoles et l'un des bras comporte une portion inclinée reliée mécaniquement à l'actionneur via une biellette.

Très avantageusement, le dispositif préhenseur comporte des moyens de détection de l'objet à saisir et de mesure de la distance entre le dispositif préhenseur et l'objet, par exemple un capteur laser.

De manière préférée, le dispositif préhenseur comporte six doigts, chacun équipé d'une ventouse et trois parmi les six doigts équipés également d'un mors.

La présente invention a également pour objet un automate comportant au moins un dispositif préhenseur selon l'invention.

### BREVE DESCRIPTION DES DESSINS

La présente demande sera mieux comprise à l'aide de la description qui va suivre et des dessins en annexe sur lesquels:
[Fig.1] est une représentation schématique d'un exemple d'automate équipé d'un exemple d'un dispositif préhenseur selon l'invention,
[Fig.2] est une vue de côté d'un exemple d'un dispositif préhenseur selon l'invention,
[Fig.3] est une vue de dessus du dispositif préhenseur de la figure 2,
[Fig.4] est une vue en coupe de la figure 3 le long du plan A-A,
[Fig.5] est une vue en perspective du dispositif préhenseur de la figure 1 dans une autre configuration et sans objet,
[Fig.6] est une vue en perspective du dispositif préhenseur de la figure 1 dans une autre configuration, dans laquelle un objet est saisi par toutes les ventouses,
[Fig.7] est une représentation schématique d'un exemple d'objet qui peut être manipulé en utilisant les mors du dispositif préhenseur de la figure 2,
[Fig.8] est une vue en coupe longitudinale d'un autre exemple de réalisation d'un dispositif préhenseur selon l'invention,
[Fig.9] est une vue de détail de la figure 8,
[Fig.10] est une vue de détail d'une variante de réalisation.

### DESCRIPTION DÉTAILLÉE DE MODES DE RÉALISATION

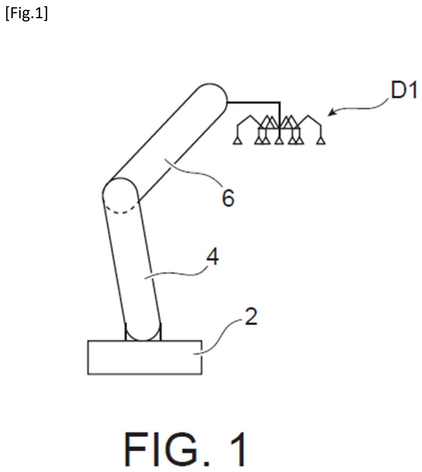

Sur la figure 1, on peut voir une représentation schématique d'un exemple d'automate A équipé d'un exemple d'un dispositif préhenseur D1 selon l'invention tenant un objet O. L'automate A comporte une base 2, un premier bras 4 articulé sur la base 2, un deuxième bras 6 articulé sur le premier bras 4 et le dispositif préhenseur D1 fixé à l'extrémité libre du deuxième bras 6.

L'actionnement des bras 4, 6 permet de déplacer dans les trois directions de l'espace le dispositif préhenseur D1.

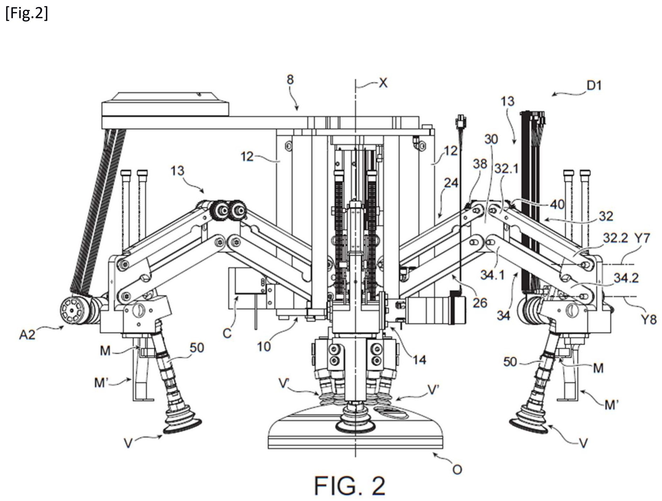

Il sera compris que le dispositif préhenseur D1 peut être fixé à tout autre type d'automate. Sur les figures 2 à 6, on peut voir un exemple de réalisation du préhenseur D1.

Dans cet exemple, le dispositif D1 comporte six doigts, mais ce nombre n'est pas limitatif comme nous le verrons ci-dessous.

Le dispositif D1 comporte un support 8 destiné à être fixé au bras 4 de l'automate, une plateforme 10 fixée au support et des doigts articulés sur la plateforme 10.

Le dispositif présente un axe longitudinal X.

La plateforme 10 est fixée au support de manière rigide , par exemple au moyen de tiges 12 ménageant entre elles des fenêtres pour les doigts.

Les doigts sont répartis angulairement de manière régulière autour de l'axe X. Chaque doigt est articulé en rotation sur la plateforme comme cela sera décrit ci-dessous. Chaque doigt est articulé autour d'un axe orthogonal à l'axe X.

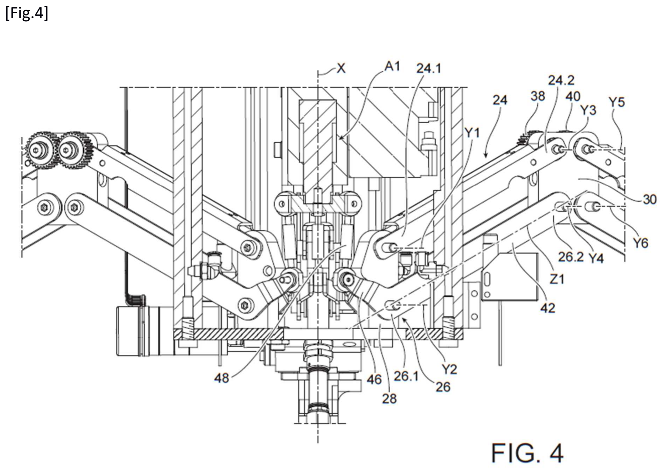

De manière avantageuse, un actionneur A1 (figure 4) monté sur la plateforme 10 assure le déplacement de tous les doigts simultanément.

Dans cet exemple, les doigts sont de deux types. Les doigts 13 comportent un mors court M, un mors long M' et une ventouse V, et les doigts 14 comportent une ventouse V. Les doigts 13 et les doigts 14 sont disposés alternativement autour de l'axe X.

Un dispositif comportant des doigts munis uniquement de mors ou uniquement de ventouses entre dans le cadre de la présente invention.

Dans cet exemple et de manière avantageuse, un ensemble de ventouses V' est fixé sur la plateforme 10. Les ventouses V' sont utilisés à la place des ventouses V ou en combinaison avec les ventouses V. Les ventouses V' peuvent être montées sur rotule.

Nous décrirons en détail les doigts 13. Les doigts 14 présentent une structure similaire à celle des doigts 13, sauf en ce qui concerne les mors.

Comme on peut le voir sur la figure 2, chaque doigt 13 comporte une tringlerie à deux parallélogrammes P1, P2.

Le parallélogramme P1 comporte deux bras 24, 26 parallèles entre eux et deux consoles 28, 30. La console 28 est fixée sur la plateforme 10. Chaque bras 24, 26 est articulé par une extrémité 24.1, 26.1 sur la console 28 autour d'un axe Y1, Y2 orthogonal à l'axe X, et par une autre extrémité 24.2, 26.2 sur la console 30 autour d'un axe Y3, Y4 parallèle aux axes Y1, Y2. Le deuxième parallélogramme P2 comporte la console 30, deux bras 32, 34 parallèles entre eux et une console 36. Chaque bras 32, 34 est articulé par une extrémité 32.1, 34.1 sur la console 30 autour d'un axe Y5, Y6 parallèle aux axes Y1, Y2 et par une autre extrémité 32.2, 34.2 articulée sur la console 36 autour d''un axe Y7, Y8 parallèle aux axes Y1, Y2.

Le bras 24 comporte, à son extrémité 24.1, un pignon 38 fixe en mouvement avec le bras 24 et le bras 32 comporte, à son extrémité 32.1, un pignon 40 fixe en mouvement avec le bras 32. Les pignons 38, 40 s'engrènent l'un l'autre de sorte à ce que le sens de rotation du bras 32 soit opposé au sens de rotation du bras 24.

Du fait de la structure à double parallélogramme et des pignons 38, 40, lorsque le bras 24 a un déplacement vers le bas dans la représentation de la figure 4, le bras 32 et le bras 34 se relèvent, ainsi que la console 36.

Lorsque les parallélogrammes P1 et P2 se déforment, la console 36 a un déplacement le long de l'axe X et un déplacement radial en rapprochement et en éloignement de l'axe X.

La console 36 remplit la fonction de support pour les moyens de préhension.

Dans cet exemple, les moyens de préhension comportent une ventouse V, un mors court M et un mors long M'. La mise en œuvre d'un mors long et d'un mors court permet de saisir des objets des différentes dimensions, notamment de différentes hauteurs. Des moyens de préhension ne comportant qu'un mors court ou un mors long ne sort pas du cadre de la présente invention.

L'actionneur A1 est, dans cet exemple et de manière avantageuse, un actionneur linéaire, par exemple un piston électrique apte à générer un mouvement le long de l'axe X.

Très avantageusement l'actionneur A1 est positionné le long de l'axe X et est fixé entre la plateforme et le support.

La partie mobile de l'actionneur A1 est reliée mécaniquement au premier parallélogramme de chaque doigt 13, 14, de sorte que son déplacement linéaire le long de l'axe X provoque un déplacement des bras 24, 26.

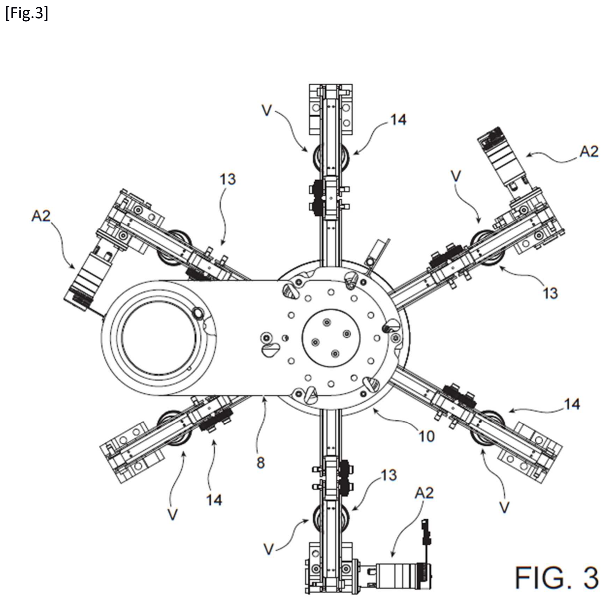

Sur la figure 3, on peut voir un exemple de système de transmission entre l'actionneur linéaire et les doigts.

Dans cet exemple et de manière avantageuse, le système de transmission est un système à came.

Le bras 26 comporte une première partie 42 s'étendant le long d'un axe Z1 articulée en rotation sur la console 28 autour de l'axe Y2. Le bras 26 comporte un deuxième partie 46 formant un angle avec la première partie et s'étendant en direction de l'axe X.

Le système de transmission comporte également une biellette 48 reliant la partie mobile du piston électrique et l'extrémité libre de la deuxième partie 46 du bras 26.

Ainsi un déplacement linéaire de la partie mobile de l'actionneur A1 vers le haut dans la représentation de la figure 4 provoque une rotation du bras 26 vers le bas et un éloignement radial de la console 36. Inversement, un déplacement vers le bas de la partie mobile de l'actionneur A1 provoque une rotation du bras 26 vers le haut et un rapprochement radial de la console 36.

Afin d'activer tous les bras 13, 14 simultanément, six biellettes 48 sont mises en œuvre et sont articulées sur la partie mobile de l'actionneur A1 au moyen d'une couronne solidaire en translation de la partie mobile de l'actionneur et sur laquelle sont articulées les biellettes. Ainsi, en mettant en œuvre un seul actionneur tous les doigts sont déployés ou rétractés simultanément.

En outre, du fait de la réalisation des doigts à double parallélogramme, toutes les consoles 36 portant les moyens de préhension sont en permanence dans le même plan, qui est orthogonal à l'axe X.

En variante, l'actionneur linéaire est un actionneur hydraulique.

La mise en œuvre d'un seul actionneur permet de simplifier la commande. En effet, on assure un synchronisation mécanique de tous les doigts et un positionnement de tous les mors dans le même plan, et de toutes les ventouses dans le même plan. En outre, la masse suspendue est réduite. De plus l'encombrement total est sensiblement réduit.

Dans un autre exemple de réalisation, chaque doigt a son propre actionneur. Dans ce cas il peut s'agit d'actionneurs rotatifs entrainant directement en rotation l'un ou l'autre des bras 24, 26.

La ventouse V est portée à l'extrémité d'une tige 50 fixée à la console. La ventouse est avantageusement montée sur rotule pour s'adapter aux différentes configurations des objets à saisir. Par ailleurs, la ventouse V est avantageusement montée sur ressort pour absorber les erreurs dans la direction X.

Des moyens d'aspiration d'air (non représentés) sont prévus pour générer une dépression entre la ventouse et la surface de l'objet à déplacer afin d'assurer une solidarisation de la ventouse à la surface de l'objet. Ces moyens comportent un tuyau reliant l'intérieur de la ventouse à une source de vide.

Une vanne, avantageusement une électrovanne, permet de commander la mise au vide et la mise à l'air de l'intérieur de la ventouse pour solidariser ou au contraire séparer la ventouse et l'objet.

Les ventouses V' sont également reliées au circuit d'aspiration d'air et sont commandées de manière séparée des ventouses V'.

Le dispositif préhenseur peut comporter un circuit pneumatique auquel toutes les ventouses sont reliées, le circuit pneumatique étant destiné à être connecté à une source de vide. Avantageusement, la commande du vide pour toutes les ventouses est centralisée.

Les moyens de préhension comportent également un mors court M et un mors long M' permettant de saisir des objets autres que des objets saisissables par des ventouses, par exemple des objets formés d'une structure annulaire. Très avantageusement, le mors long M' est déplaçable longitudinalement à l'extrémité libre du doigt au moyen d'un moteur électrique à courant continu A2 . Le mors M' se déplace alors le long de l'axe X, ce qui permet de saisir des objets de hauteur différente. En outre, cela permet de dégager le mors par rapport à la ventouse portée par la même console et faciliter la mise en place sur un objet.

Dans l'exemple représenté, les moyens de déplacement comportent deux crémaillères 52 à l'extrémité desquelles le mors est monté, et un moteur électrique porté par la console 36, qui est accouplé avec les crémaillères au moyen d'engrenages. D'autres moyens pour déplacer les mors peuvent être mis en œuvre, par exemple un système à vis sans fin. Une seule crémaillère pourrait être mise en œuvre.

Très avantageusement, chaque mors long M' est déplaçable séparément, ce qui permet par exemple de déplacer un objet, par exemple un anneau, un des mors long M' étant déplacé le long de la direction de l'axe X pour venir coopérer avec le bord intérieur de l'anneau. En déplaçant le dispositif, l'anneau est tiré par coopération du mors M' et du bord intérieur de l'anneau.

En variante, les mors sont fixes longitudinalement.

De préférence, des capteurs de position haute et position basse de chaque crémaillère sont mis en œuvre. En variante, un encodeur sur le moteur et un capteur en position sont prévus. Le mors , vu de côté, une forme en U configuré pour loger une portion de contour de l'objet à déplacer. La distance séparant les deux branches du U définit l'épaisseur maximale de la partie de l'objet qui est saisie.

Très avantageusement, les mors sont interchangeables permettant d'adapter l'écartement entre les branches du U aux objets à saisir. En variante, la distance entre les branches du U est réglable.

En variante encore, les ventouses sont aptes à se déplacer longitudinalement.

Dans l'exemple représenté, les tiges portant les ventouses sont inclinées par rapport à l'axe X et les ventouses sont orientées vers l'axe X rendant le dispositif préhenseur adapté à saisir des objets de forme convexe. Les ventouses présentant une certaine flexibilité et le montage sur rotule permet de s'adapter à différentes convexités.

En variante, les tiges portant les ventouses sont parallèles à l'axe X, permettant de manipuler des objets plans, voire les tiges portant les ventouses sont inclinées par rapport à l'axe X et les ventouses sont orientées en éloignement de l'axe X permettant de manipuler des objets concaves.

De préférence, le dispositif comporte des moyens pour détecter la présence de la pièce à saisir et pour mesurer la distance entre l'objet et le dispositif afin de gérer l'approche du dispositif de l'objet en phase de saisie et commander l'activation des doigts et des moyens de préhension.

Par exemple, le dispositif comporte au moins un capteur laser C fixé sur la plateforme permettant de déterminer la distance entre les moyens de préhension.

La détection qu'un objet a été saisi ou suffisamment saisi peut être obtenue en mesurant le niveau de dépression dans le ventouses ou, dans le cas où ce sont les mors qui sont utilisés, en mesurant un couple de serrage via la vérin électrique.

En variante ou en complément, le dispositif comporte des capteurs optiques de type caméra et/ou des capteurs à ultrason.

La commande de l'actionneur A1 et de chacun des moteurs A2 et la prise en compte des signaux transmis par le ou les capteurs sont réalisées par une unité de commande (non représentée). Celle-ci peut être embarquée sur le dispositif préhenseur et recevoir des instructions de l'automate, soit être déportée sur l'automate lui-même.

L'unité de commande est très avantageusement configurée pour commander séparément et individuellement le déplacement de chacun des mors M'. Ainsi chaque moteur peut être commandé pour placer les mors M' à des altitudes différentes. L'unité de commande est configuré pour envoyer une instruction à chaque moteur, les instructions pouvant être différentes les unes des autres. Dans l'exemple représenté, le préhenseur comporte trois mors M' mobiles. A titre d'exemple, simultanément un mors peut prendre une position extrême basse, un autre mors peut prendre une position extrême haute et un autre mors peut prendre une position intermédiaire. Le fait que chaque mors puisse être déplacé séparément et prendre des positions différentes permet d'offrir un nombre élevé de configurations pour manipuler des objets. Comme expliqué ci-dessus, l'unité de commande peut déplacer un seul mors ou deux mors en position basse pour tirer un anneau ou pousser un objet. On peut également envisager de saisir des objets ayant des formes complexes et/ou des objets fragiles en plaçant les mors à des altitudes différentes. En outre, on peut envisager de déplacer un ou plusieurs mors lors de la manipulation de l'objet.

Des exemples de fonctionnement du dispositif préhenseur vont maintenant être décrits. Dans un premier exemple, l'objet à saisir est une couvercle O convexe tel que représenté sur la figure 2.

Le dispositif préhenseur est fixé à l'extrémité libre d'un automate comme cela est représenté sur la figure 1 et est connecté électriquement à une source d'énergie par exemple celle de l'automate pour alimenter l'actionneur A1 et les moteurs électriques. Par ailleurs, le circuit pneumatique des ventouses est relié à un système de mise en dépression.

L'automate déplace le dispositif préhenseur de sorte à le disposer au-dessus et à proximité de l'objet à saisir. Le déplacement du dispositif préhenseur est guidé par les signaux émis par les capteurs et traités par l'unité de commande.

Lorsque l'axe X du dispositif est approximativement aligné avec l'axe du couvercle, l'actionneur est activé, provoquant un déploiement et simultanément un abaissement de tous les doigts 13, 14 en direction de l'objet jusqu'à ce que les ventouses entrent en contact avec le couvercle. Le vide est ensuite généré dans chacune des ventouses. Le couvercle est alors solidaire des ventouses et peut être déplacé.

Lorsque le couvercle est disposé à son nouvel emplacement, le vide est rompu dans les ventouses et le couvercle est libéré.

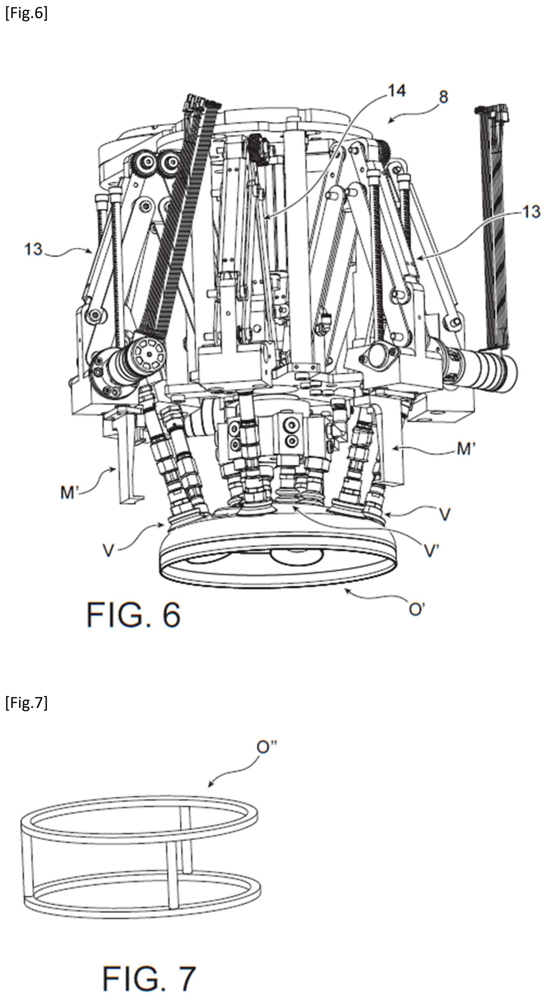

Dans un deuxième exemple, l'objet à saisir a une forme annulaire O" tel que représenté sur la figure 7. Les mors sont utilisés.

Le dispositif préhenseur est fixé à l'extrémité libre d'un automate comme cela est représenté sur la figure 1.

L'automate déplace le dispositif préhenseur de sorte à le disposer au-dessus et à proximité de l'objet à saisir. Lorsque l'axe X est approximativement aligné avec l'axe de l'objet, l'actionneur est activé, provoquant un déploiement radial et simultanément un abaissement de tous les doigts en direction de l'objet jusqu'à ce que les mors entourent radialement l'objet creux. L'actionneur est ensuite activé dans le sens inverse pour provoquer un rapprochement radial des mors en direction de l'axe X qui, simultanément, se déplacent vers le haut, jusqu'à ce que les mors reçoivent une portion de la circonférence de l'objet creux et jusqu'à ce que le fond des mors entre en contact avec la circonférence et immobilisent l'objet.

L'objet est alors solidaire du dispositif préhenseur et peut être déplacé.

Lorsque l'objet est disposé à son nouvel emplacement, l'actionneur A1 est commandé pour que les mors se déplacent radialement vers l'extérieur et vers le haut et libèrent l'objet. Grâce au déplacement de tous les mors dans le même plan, il est possible de saisir facilement des objets relativement fins.

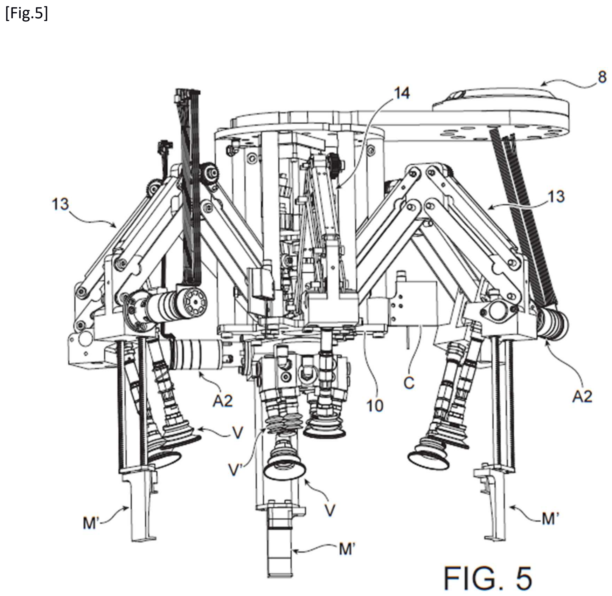

Sur la figure 5, on peut voir le dispositif D1 dans lequel les mors longs M' sont complètement déployés le long de l'axe X.

Sur la figure 6, on peut voir le dispositif D1 dans une autre configuration de déplacement d'un objet O' utilisant les ventouses V et V'. Dans cette configuration, les doigts 13 sont repliés.

Le dispositif selon l'invention permet de manipuler des objets de dimensions et de forme variées.

Dans l'exemple de réalisation mettant en œuvre à la fois des ventouses et des mors, le dispositif préhenseur peut manipuler des objets pleins et des objets creux. En outre il peut manipuler, au moyen des ventouses, des objets qui n'ont pas une géométrie de révolution. De plus il peut saisir des objets de diamètre varié au moyen des mors.

Dans l'exemple représenté, trois doigts sont équipés de mors et les six doigts sont équipés chacun d'une ventouse. Le dispositif selon l'invention comporte au moins trois doigts, de préférence répartis angulairement à 120° les uns des autres, pour assurer un saisie régulièrement répartie sur le contour des objets, et ce qui permet d'assurer une répartition équilibrée de la charge sur le dispositif préhenseur.

Lors de son déplacement chargé ou non d'un objet, le dispositif préhenseur peut prendre toute position, horizontale, verticale, inclinée. Il est possible également de le retourner de sorte que les extrémités libres des doigts pointent vers le haut.

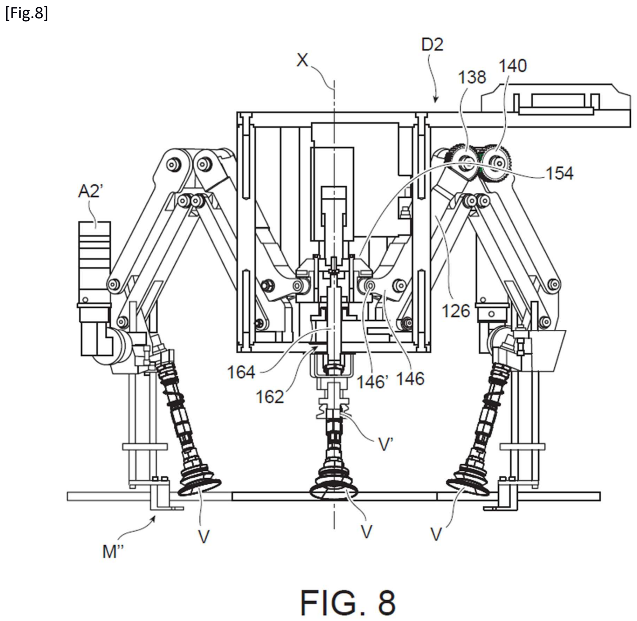

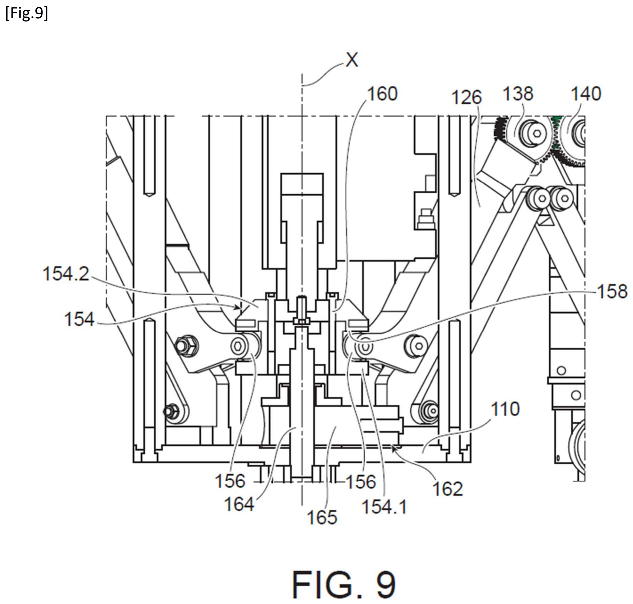

Sur les figure 8 à 10, on peut voir un autre exemple de réalisation d'un préhenseur D2 selon l'invention.

Le système de transmission du préhenseur D2 diffère de celui du préhenseur D1 notamment en ce qu'il ne comporte pas de biellette.

Le système de transmission comporte un chariot 154 solidaire en translation du vérin électrique et mobile le long de l'axe X. Dans l'exemple représenté, le chariot 154 est fixé à l'extrémité libre du vérin électrique. Le chariot 154 est disposé entre les extrémités libres 146' des deuxièmes parties 146 des bras 126 s'étendant en direction de l'axe X.

Chaque extrémité libre 146' comporte un roulement 156 dont l'axe est contenu dans un plan perpendiculaire à l'axe X.

Chaque roulement 156 est reçu dans un logement 158 prévu dans une face latérale du chariot. Chaque logement est conçu pour maintenir le roulement dans son logement de sorte qu'il puisse roulé et offrir un jeu horizontal à la deuxième partie. En effet, la deuxième partie forme un levier. Lors de sa rotation autour de l'articulation sur la console 28, son extrémité libre décrit un arc de cercle et est lié au chariot qui se déplace le long de l'axe longitudinal X. A titre d'exemple, le jeu est de l'ordre de quelques mm, par exemple de l'ordre de 2 mm.

Dans l'exemple représenté, le chariot 154 comporte une partie inférieure 154.1 et une partie inférieure 154.2 délimitant entre elles des logements pour les roulements 156. Les première et deuxième parties sont solidarisées l'une à l'autre par exemple par des vis 160 permettant d'ajuster les dimensions des logements à celles des roulements et permettre d'assurer le jeu requis.

Dans l'exemple représenté, le chariot 154 comporte sur sa face latérale une rainure définie entre les première et deuxième partie, cette rainure étant configurée pour loger les roulements. Ainsi il n'est pas nécessaire d'orienter angulairement le chariot par rapport aux bras.

La configuration du chariot en première et deuxième partie permet de réaliser le montage de tous les roulements simultanément.

Il sera compris qu'un chariot avec des logements individuels et/ou des moyens de fixation de roulement individuels ne sort pas du cadre de la présente invention.

Cet exemple de réalisation est de réalisation plus simple et plus robuste que celui avec les biellettes et les réglages sont également plus simples.

De manière particulièrement avantageuse, le préhenseur est muni de frein 162 permettant de freiner, voir bloquer le déplacement du chariot le long de l'axe X. Dans cet exemple, le chariot est prolongé par un arbre 164 traversant la plateforme 110. Avantageusement, le coulissement de l'arbre à travers la plateforme est tel que l'arbre 164 est guidé longitudinalement et de ce fait le chariot 154 est guidé longitudinalement.

Le frein 162 agit sur l'arbre 164 de sorte à freiner, voire bloquer son déplacement le long de la direction longitudinale X. Dans cet exemple, le frein 162 est transversal à l'arbre. Le frein est par exemple un frein pneumatique comportant une tige 165 d'axe perpendiculaire à l'axe X et traversé par l'arbre 164. Le déplacement de la tige le long de son axe assure un freinage plus ou moins important de l'arbre le long de l'axe X.

De manière avantageuse, les pignons 138 et 140 portés par les bras 124 et 132 et s'engrenant l'un l'autre sont avantageusement montés chacun sur un support qui est ensuite fixé sur le bras, ce qui permet un ajustement aisé de l'entraxe des deux pignons.

Chaque mors M" est avantageusement déplaçable individuellement au moyen d'un moteur A2'. Dans cet exemple, les moteurs sont orientés verticalement ou sensiblement verticalement ce qui permet de réduire les risques d'interaction entre les bras.

De manière similaire au préhenseur D1, l'unité de commande est très avantageusement configurée pour commander séparément et individuellement le déplacement des mors M". Ainsi chaque moteur peut être commandé pour placer les mors M" à des altitudes différentes.

L'unité de commande est configurée pour envoyer une instruction à chaque moteur, les instructions pouvant être différentes les unes des autres.

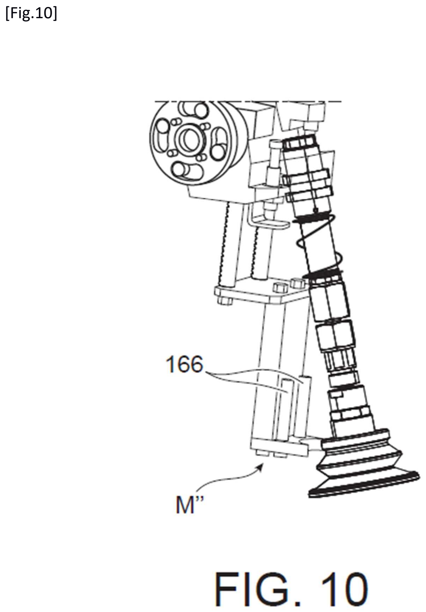

Dans une variante de réalisation représentée sur la figure 10, chaque mors M" comporte avantageusement deux goupilles 166 montées sur la partie sensiblement horizontale du mors, et s'étendant sensiblement verticalement, permettant d'éviter un contact direct entre la partie verticale du mors et les objets saisis. De préférence, les goupilles 166 sont montées dans des perçages réalisés dans la partie sensiblement horizontale du mors, permettant leur remplacement aisé lorsqu'elles sont endommagées.

Dans cet exemple de réalisation, le préhenseur D2 comporte en plus des ventouses V un ventouse V' positionnée sur l'axe X.

Il sera compris que tous les mors du préhenseur peuvent être déplacés longitudinalement à l'extrémité libre du doigt au moyen d'un moteur électrique.

## Revendications

1. Dispositif préhenseur d'un objet comportant une plateforme (10) d'axe longitudinal (X) et au moins trois doigts (13, 14) articulés en rotation sur la plateforme (10) et des moyens de préhension portés par chacune des extrémités libres des doigts (13, 14), les au moins trois doigts (13, 14) étant répartis angulairement de manière régulière autour de l'axe longitudinal (X), chaque doigt (13, 14) comportant une tringlerie à double parallélogramme comprenant un premier parallélogramme (P1) articulé sur la plateforme (10) autour d'un axe orthogonal à l'axe longitudinal (X), un deuxième parallélogramme (P2) étant articulé sur le premier parallélogramme (P1) et un jeu de pignons (38, 40) entre le premier parallélogramme (P1) et le deuxième parallélogramme (P2), de sorte que le déplacement dans un sens de rotation du premier parallélogramme (P1) impose un déplacement dans un sens de rotation opposé au deuxième parallélogramme (P2), et un actionneur (A1) porté par la plateforme et configuré pour déplacer simultanément tous les doigts (13 ,14), dans lequel le dispositif préhenseur comporte des moyens de déplacement d'au moins une partie des moyens de préhension par rapport à l'extrémité libre des doigts (13, 14) dans la direction longitudinale (X) et une unité de commande configurée pour déplacer séparément chacun des moyens de préhension dans la direction longitudinale (X).

2. Dispositif préhenseur selon la revendication 1, dans lequel les moyens de déplacement comportent pour chacun desdits moyens de préhension un moteur électrique et un système à crémaillère (52).

3. Dispositif préhenseur selon la revendication 1 ou 2, dans lequel les moyens de préhension comportent des ventouses (V), chaque doigt (13, 14) portant un son extrémité libre une ventouse (V), destinée à être connectée à un système d'aspiration.

4. Dispositif préhenseur selon la revendication 1, 2 ou 3, dans lequel les moyens de préhension comportent des mors (M), lesdits mors étant montés sur tout ou partie des doigts (13).

5. Dispositif préhenseur selon l'une quelconque des revendications précédentes, dans lequel l'actionneur (A1) est un piston électrique aligné avec l'axe longitudinal (X) et porté par la plateforme (10) et dans lequel le dispositif préhenseur comporte un système de conversion du déplacement linéaire du piston électrique en un mouvement de rotation de chacune des doigts (13, 14).

6. Dispositif préhenseur selon la revendication 5, dans lequel le premier parallélogramme (P1) comporte deux consoles (28, 30), dont une console (28) est fixée sur la plateforme (10), et deux bras parallèles (24, 26) articulés chacun sur les deux consoles (28, 30) et dans lequel l'un des bras (26) comporte une partie inclinée (46) reliée mécaniquement à l'actionneur (A1), ladite partie inclinée s'étendant entre l'articulation du bras sur la console et l'actionneur.

7. Dispositif préhenseur selon la revendication 6, comportant un chariot (154) solidaire en translation du vérin le long de l'axe longitudinal (X) et dans lequel chaque partie inclinée comporte au niveau de son extrémité libre un roulement (156) monté dans le chariot (154), de sorte que la portion inclinée est articulée en rotation sur le chariot (154) et permet un déplacement du premier parallélogramme lors de l'activation de l'actionneur.

8. Dispositif préhenseur selon la revendication 7, comportant un frein (162) pour freiner le déplacement du chariot le long de l'axe longitudinal (X).

9. Dispositif préhenseur selon la revendication 8, comportant un arbre (164) solidaire en translation du chariot (154) et s'étendant le long de l'axe longitudinal (X) et dans lequel le frein (162) est configuré pour agir sur l'arbre (164).

10. Dispositif préhenseur selon l'une quelconque des revendications 1 à 9, comportant des moyens de détection de l'objet à saisir et de mesure de la distance entre le dispositif préhenseur et l'objet, par exemple un capteur laser (C).

11. Dispositif préhenseur selon l'une quelconque des revendications précédentes, comportant six doigts (13, 14), chacun équipé d'une ventouse (V) et trois parmi les six doigts équipés également d'un mors (M).

12. Automate comportant au moins un dispositif préhenseur selon l'une quelconque des revendications précédentes.
